# EUROPEAN PATENT APPLICATION

(11) **EP 4 645 677 A1**
(43) Date of publication of application: **05.11.2025**
(21) Application number: 24174032.3
(22) Date of filing: 03.05.2024
(51) Int. Cl.: H02P 7/03, H02P 7/29

(54) **MOTOR DRIVE UNIT FOR DRIVING ELECTRIC MOTORS OF AN ELECTRONIC DOOR LATCH ARRANGEMENT OF A VEHICLE**

(71) Applicant: Kiekert AG, 42579 Heiligenhaus (DE)
(72) Inventor: MERLETTI, Marco, 21045 Gazzada Schianno (Varese) (IT)
(74) Representative: Michalski Hüttermann & Partner Patentanwälte mbB

(57) **Abstract**

The invention relates to a motor drive unit (1) configured for driving N-1 electric motors (2) of an electronic door latch arrangement (3) of a vehicle (4), comprising N ≥ 4 half-bridges (6) and the N-1 electric motors (2) with N being a natural number, wherein
each half-bridge (6) comprises two switches (8, 10) arranged in series thereby forming a midpoint (11),
each motor (2) is galvanically conductively connected to two different midpoints (11), and
each midpoint (11) is galvanically conductively connected to ≥ 1 and ≤ N-2 electric motors (2). In this way an improved control of electric motors in a vehicle is provided.

## Description

The invention relates to a motor drive unit for driving electric motors of an electronic door latch arrangement of a vehicle, comprising a plurality of half-bridges and a plurality of electric motors, wherein each half-bridge comprises two switches arranged in series thereby forming a midpoint. The invention further relates to a method for operating the motor drive unit, the electronic door latch arrangement and the vehicle comprising the electronic door latch arrangement

### Background

Electronically actuated door locks, door openers and door closers are increasingly being installed in vehicles to facilitate the opening, closing, unlocking and locking of the vehicle's doors and tailgate. The electronically actuated door lock, often referred to as an eLatch, is unlocked and locked electronically. The electronically actuated door opener, also known as presenter, is also electronically operated and is used to open the door. The electronically actuated door closer, also known as cincher, closes the open door. The electronically actuated door opener and the electronically actuated door closer as well as the electronically actuated door lock are often integrated in one component. The door can be opened and closed in different ways. For example, doors are known that perform a pivoting movement to open and close. However, there are also doors that are pushed or pulled in one direction. Such sliding doors can be equipped with an automatic system, for example, to create an electronically actuated sliding door. In the present case, electronically actuated door locks, electronically actuated door openers and electronically actuated door closers are subsumed under the term "electronic door latch arrangement".

All of these concepts are based on a drive concept motorized with electric motors. As these electric motors are usually located at different points in the vehicle, they are often controlled by a central motor drive with a control unit. A motor drive unit comprises the motor drive, the control unit and the electric motors. In addition to the above-mentioned areas of application for electric motors in a vehicle, they can also be found in electric window lifters or electrically adjustable exterior mirrors of the vehicle. The electronic door latch arrangement can be formed in each door of the vehicle, for example. Alternatively, however, it is also possible for the electronic door latch arrangement to extend over the entire vehicle and for a part of the electronic door latch arrangement to be arranged inside the vehicle and for the electric motors of the electronic door latch arrangement to be arranged in the periphery of the vehicle on the doors and the tailgate.

Conventional motor drives that enable motor control of such electric motors with the control unit have an H-Bridge architecture. Each electric motor is assigned via a separate H-Bridge consisting of two half-bridges. The high number of electric motors in the vehicle is therefore always accompanied by a corresponding number of H-Bridges, which entail many connections and signals, each of which must be controlled by the control unit. The control unit must therefore either be designed such that it can operate these connections and signals or, alternatively, many control units must be installed, both resulting in high costs. In addition, the wiring of these electric motors and the motor drives as well as the control units becomes significantly more complex with each electric motor installed.

It is therefore an object of the invention to provide an improved control of electric motors in a vehicle.

The object of the invention is solved by the features of the independent claims. Preferred implementations are detailed in the dependent claims.

Thus, a motor drive unit configured for driving N-1 electric motors of an electronic door latch arrangement of a vehicle is provided, comprising N ≥ 4 half-bridges and the N-1 electric motors with N being a natural number, wherein each half-bridge comprises two switches arranged in series thereby forming a midpoint, wherein each motor is galvanically conductively connected to two different midpoints, and each midpoint is galvanically conductively connected to ≥ 1 and ≤ N-2 electric motors.

As a result, an H-Bridge is formed for each of the electric motors such that each electric motor can be controlled individually. According to the invention, it is therefore provided that at least three electric motors can be controlled by the at least four half-bridges in such a way that the electric motors are driven independently of each other and that the polarities of the electric motors can be changed independently of each other. With a number of N = 4 half-bridges, there are thus N-1 = 3 electric motors according to the invention. The number of controllable electric motors is thus reduced by one in relation to the number of half-bridges. Preferably, the half-bridges or their midpoints are alternately connected in series with the electric motors in such a way that N-2 half-bridges are each galvanically conductively connected with two different electric motors and two half-bridges are each galvanically conductively connected with only one electric motor.

In principle, it is possible to design the motor drive unit in various ways. According to a preferred embodiment of the invention, however, the half-brides are designed in the form of an integrated circuit. The midpoints are then located on a circuit board of the integrated circuit, such that the respective electric motor can be connected to the midpoints there. In general, the midpoints enable a galvanically conductive connection between the half-bridges and the electric motors. Of course, the midpoints can also be led to the respective electric motors in the form of cables.

The switches are designed such that they can be opened and closed with a control unit. When both switches of a half-bridge are closed, the half-bridge is energized and also supplies the contacted electric motors with power via the midpoint.

Thus, an essential feature of the invention is that N half-bridges are used instead of 2 x (N-1) half-bridges for the N-1 electric motors. This enables a much more efficient, cost-effective, and signal and space-saving controllability of the respective electric motors.

In principle, it is possible to control different numbers of electric motors with the motor drive unit. According to a preferred embodiment of the invention, however, the N ≥ 4 half-bridges comprise a first half-bridge, a second half-bridge, a third half-bridge and a fourth half-bridge and the N-1 electric motors comprise a first electric motor, a second electric motor and a third electric motor, the first electric motor is galvanically conductively connected to the midpoints of the first half-bridge and the second half-bridge, the second electric motor is galvanically conductively connected to the midpoints of the first half-bridge and the third half-bridge, and the third electric motor is galvanically conductively connected to the midpoints of the third half-bridge and the fourth half-bridge. The motor drive unit according to the invention can be used to drive four electric motors independently of one another and the polarities of the electric motors can be changed independently of one another.

Accordingly, a first H-bridge is formed for the first electric motor, a second H-bridge is formed for the second electric motor and a third H-bridge is formed for the third electric motor. Thus, if the first electric motor is connected galvanically conductive to the midpoint of the first half-bridge with a contact corresponding to one polarity and galvanically conductive to the midpoint of the second half-bridge with a contact corresponding to the other polarity. By driving the electric motor individually, it is possible to change the polarity of the respective electric motor. Changing the polarity of the first electric motor and the other electric motors causes the direction of rotation of the electric motor to change from a counterclockwise rotation to a clockwise rotation or vice versa.

According to an especially preferred embodiment of the invention, the N ≥ 4 half-bridges comprise a fifth half-bridge and a sixth half-bridge and the N-1 electric motors comprise a fourth electric motor and a fifth electric motor, the fourth electric motor is galvanically conductively connected to the midpoints of the second half-bridge and the fifth half-bridge, and the fifth electric motor is galvanically conductively connected to the midpoints of the fifth half-bridge (32) and the sixth half-bridge. This makes it possible that five electric motors are driven independently of each other as well as changing the polarities of the electric motors independently from each other with the motor drive unit according to the invention.

According to a further preferred embodiment of the invention, the N ≥ 4 half-bridges comprise a fifth half-bridge and the N-1 electric motors comprise a fourth electric motor, wherein the fourth electric motor is galvanically conductively connected to the midpoints of the first half-bridge and the fifth half-bridge. The series connection of the midpoints of the half-bridges and electric motors is thus provided with a parallel branch at the midpoint of the first half-bridge. This makes it possible to drive the four electric motors independently of each other as well as changing the polarities of the electric motors independently of each other with the motor drive unit according to the invention.

In general, the switches can be formed in different ways. According to a preferred embodiment of the invention, however, the two switches are provided as a high-side transistor and a low-side transistors each comprising a respective source terminal, a respective drain terminal and a respective gate terminal, all source terminals of all high-side transistors are galvanically conductively configured for being connected to an energy source, and the drain terminals of all low-side transistors are galvanically conductively configured for being connected to a ground potential.

The high-side transistors are galvanically connected at their respective source terminals to an energy source, such as the main energy source in the form of a vehicle battery or the like. A drain terminal of the respective high-side transistor is connected to a respective source terminal of the respective low-side transistor via the interconnected midpoints. A drain terminal of the respective low-side transistor is correspondingly galvanically connected to a negative pole of the energy source or to a ground potential. In general, various transistors can be used as high-side transistors and low-side transistors. According to a preferred embodiment of the invention, however, the transistors are field-effect transistors, in particular MOSFETs.

In principle, it is possible to contact the half-bridges with each other in different ways. According to a preferred embodiment of the invention, however, it is provided that the high-side transistors of the half-bridges are galvanically connected to each other in pairs, and the low-side transistors of the half-bridges are galvanically conductively connected to each other in pairs with respect to the ground potential. With an odd number of half-bridges, a single half-bridge is individually assigned to the ground potential and the energy source; otherwise, an odd numbered half-bridge, such as the first half-bridge, is always connected to an even numbered half-bridge, in this case the second half-bridge.

According to a preferred embodiment of the invention, wherein every second half-bridge comprises a monitoring unit, and the respective monitoring unit is configured for performing a diagnosis in an event of a short circuit to the ground potential and/or to the energy source and/or to an open load. Thereby current monitoring is possible for each H-bridge. As already mentioned, the energy source can be the vehicle's main energy source, for example in the form of a vehicle battery, or an emergency energy source, for example in the form of a supercapacitor group. In the present case, an open load refers to the monitoring that is carried out when no electric motor is connected to the midpoints, i.e. the electric motor is disconnected. With the monitoring unit, it is therefore possible to determine the functionality of the individual electric motors and thus detect corresponding defects. According to a further preferred embodiment of the invention, each half-bridge comprises the monitoring unit. It is particularly advantageous that each half-bridge is equipped with such a monitoring unit, as this allows a diagnosis to be made for each pole of the respective electric motor.

In general, it is possible to design the monitoring unit in different ways. In the present context, however, the respective monitoring unit has a current sensor, such that current monitoring is possible at each H-bridge. In this context, according to a particularly preferred embodiment of the invention, it is provided that the respective monitoring unit comprises a current limiter configured for current limiting, such that a electric motor standstill can be detected and prevented. If each half-bridge comprises the current limiter and the current sensor, defects in the respective electric motor can be detected regardless of the current polarity of the electric motor. Damage caused by short circuits can therefore be detected before irreparable damage occurs to the electric motor or the motor drive unit itself. This current or over-current monitoring on the respective electric motor also ensures that the current flowing through the motor remains within safe limits in order to avoid overloading and possible damage. The current sensors mentioned above monitors the current flow of the respective H-Bridge or half-bridge for this purpose. These sensors can be realized in the form of Hall sensors, current transformers or shunt resistors. According to a preferred embodiment, the respective monitoring unit also has a temperature sensor that can be used to monitor the temperature of the respective H-Bridge.

According to a further preferred embodiment of the invention the respective monitoring unit is provided as a smart high-side power switch formed on each high-side transistor of each half-bridge, wherein the respective smart high-side power switch is connected to a gate terminal of the respective high-side transistor for signal transmission and galvanically conductively connected to the respective half-bridge, and the respective smart high-side power switch is configured for disconnecting the gate terminal of the high-side transistor when a predetermined temperature limit value is exceeded and/or a predetermined current limit value is exceeded.

The smart high-side power switch is an integrated circuit configured to switch high currents while providing functions such as the over-current protection, short-circuit protection and thermal protection. The smart high-side power switch monitors the current flow employing the galvanic conductive connection with the respective half-bridge and can automatically interrupt the signal connection to the gate terminal when the predetermined current limit value is detected, to protect the high-side transistor and the electric motor connected via the midpoint. Furthermore, the smart high-side power switch is configured for detecting a short circuit on the electric motor and protecting the H-Bridge as such by interrupting the current flow to prevent damage. Similarly, the smart high-side power switch is configured for monitoring the temperature of the H-Bridge. If the predetermined temperature limit value is exceeded, the smart high-side power switch interrupts the galvanically conductive connection to prevent damage due to overheating. The high-side power switch can also be used to perform an undervoltage cutoff, which switches off the H-Bridge when a supply voltage falls below a certain threshold value in order to protect the energy source and prevent deep discharge. The smart high-side power switch is also configured for providing the control unit with various diagnostic information such as the status of a load, the status of the H-Bridge and possible fault conditions.

According to a preferred embodiment of the invention, the motor drive unit additionally comprises a control unit, wherein the control unit is connected to the gate terminals of the high-side transistors and gate terminals of the low-side transistors of the half-bridges for transmitting signals, and the control unit is configured for controlling the half bridges such that each electric motor is controlled individually. The control unit is used to control the motor drive units half-bridges individually. The control unit is therefore connected to the respective gates of the high-side transistors and the respective gates of the low-side transistors of all half-bridges for signal transmission. In response to a trigger in form of a signal from the control unit, the respective transistors are switched through, such that the electric motors can be controlled with the control unit. If the control unit is connected to the respective intermediate smart high-side power switches for signal transmission with the gates of the high-side transistors, diagnostic information from the smart high-side power switches is transmitted to the control unit.

In principle, the control unit can be configured in various ways. According to a preferred embodiment of the invention, however, the control unit is further configured for controlling a rotational frequency of each controlled electric motor.

In this context, according to a further preferred embodiment of the invention, the control unit is configured for controlling the respective electric motor directly or by pulse width modulation. According to a yet further preferred embodiment of the invention the control unit is configured for pulse width modulating exclusively the low-side transistors and for permanently triggering the gate terminals of the high-side transistors, such that the high-side transistors are switched through permanently. The possibility of providing several modes of electric motor control increases the versatility and usability of the motor drive unit itself. The principle that pulse width modulation is carried out exclusively via the low-side transistors enables simpler control with the control unit. Because the low-side transistors are connected directly to the ground potential, it is easier to generate the pulse-width modulated signal and use it to control the electric motors, as a reference voltage for the pulse-width modulated signal is connected directly to ground. Similarly, the circuit complexity is reduced as fewer switching elements are required, reducing the complexity of the H-Bridge itself and providing a more cost-effective solution. In addition, low-side transistors have better thermal properties as they are directly connected to ground, which in turn is associated with more efficient heat dissipation. The use of low-side transistors for transmitting the pulse width modulation also contributes to an improved stability of the H-Bridge, as overvoltages are reduced.

By triggering the high-side transistors permanently with the control unit at their gate terminal the high-side transistors are galvanically conductive from their source terminal to the drain terminal. If the monitoring unit is connected between the control unit and the gate terminal, the temperature and current in the respective half-bridge can be permanently monitored, for example. It is particularly preferred here that the monitoring unit is the smart high-side power switch.

The invention also relates to a method for operating the motor drive unit as described above for driving the N-1 electric motors of the electronic door latch arrangement of the vehicle, with the N ≥ 4 half-bridges and the N-1 electric motors, comprising the following method steps:
triggering the gate terminals of the high-side transistors of the half-bridges, such that the high-side transistors are switched through,
monitoring current and temperature of the H-bridges and interrupting the triggering of the gate terminal immediately when a predetermined temperature has been exceeded or a predetermined current value has been exceeded, and during the monitoring step:
   controlling the electric motors via the low-side transistors of the half-bridges directly or with pulse width modulation. This ensures that the respective half-bridge is continuously monitored during the triggering of the electric motors.

The invention further concerns an electronic door latch arrangement for a vehicle comprising the motor drive unit as described above. Therefore, if the electronic door latch arrangement comprises the motor drive unit with more than three electric motors, these can be controlled individually using the motor drive unit according to the invention. The arrangement of the motor drive unit in the electronic door latch arrangement enables a compact design. In addition, the motor drive unit can be directly matched to the number of electric motors to be controlled and the electronic door latch arrangement can be provided directly as an integrated component. Such an electronic door latch arrangement can be formed in each door of the vehicle and/or the tailgate of the vehicle. Alternatively, however, it is also provided for an electronic door latch arrangement to be formed centrally in the interior of the vehicle and to control electric motors in a periphery of the vehicle, i.e., in the doors and the tailgate. Accordingly, an electronic door latch arrangement is then responsible for closing the doors and the tailgate. Another electronic door latch arrangement is responsible for opening the doors and tailgate, etc.

Further, the invention relates to the vehicle with the previous described electronic door latch arrangement.

Further implementations and advantages of the method can be derived by the person skilled in the art from the motor drive unit as described before.

### Brief description of drawings

These and other aspects of the invention will be apparent from and elucidated with reference to the implementation described hereinafter.

In the drawings:
- Fig. 1: schematically depicts a motor drive unit according to a preferred embodiment of the invention,
- Fig. 2: schematically depicts a motor drive unit according to another preferred embodiment of the invention,
- Fig. 3: schematically depicts a motor drive unit according to a third preferred embodiment of the invention, and
- Fig. 4: schematically depicts a electronic door latch arrangements in a vehicle according to a preferred embodiment of the invention.

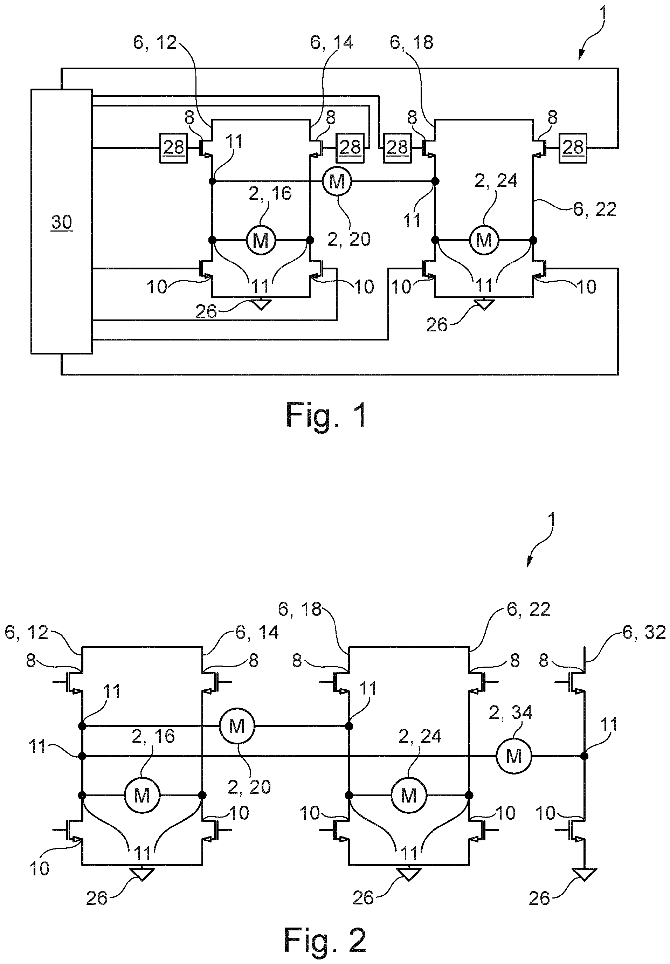

Fig. 1 now shows a motor drive unit 1 for three electric motors 2 of an electronic door latch arrangement 3 of a vehicle 4. The motor drive unit 1 has a number N = 4 half-bridges 6 corresponding to N-1 = 3 electric motors 2. Each half-bridge 6 is provided with a high-side transistor 8 and a low-side transistor 10 galvanically connected to the high-side transistor 8. A drain terminal of the high-side transistor 8 is galvanically conductively connected to a source terminal of the low-side transistor 10 via an intermediate midpoint 11. The midpoint 11 is designed such that a respective electric motor 2 can be galvanically conductively connected to it.

A first half-bridge 12 is galvanically conductively connected to the source terminal of the high-side transistor 8 with the source terminal of the high-side transistor 8 of a second half-bridge 14 and an energy source not further specified. Both the first half-bridge 12 and the second half-bridge 14 are connected with their respective drain terminals of the low-side transistors 10 to a ground potential 26.

A third half-bridge 18 is galvanically conductively connected to the source terminal of the high-side transistor 8 with the source terminal of the high-side transistor 8 of a fourth half-bridge 22 and the energy source. Both the third half-bridge 18 and the fourth half-bridge 22 are connected with their respective drain terminals of the low-side transistors 10 to the ground potential 26.

A first electric motor 16 is now contacted with the midpoint 11 of the first half-bridge 12 on the one hand and with the midpoint 11 of the second half-bridge 14 on the other hand, such that a first H-Bridge is formed. A second electric motor 20 is contacted with the midpoint 11 of the first half-bridge 12 on the one hand and with the midpoint 11 of the third half-bridge 18 on the other hand, such that a second H-Bridge is formed. A third electric motor 24 is contacted with the midpoint 11 of the third half-bridge 18 and with the midpoint 11 of the fourth half-bridge 22, such that a third H-Bridge is formed. This contacting with the respective half-bridges 6 makes it possible to control the first electric motor 16, the second electric motor 20 and the third electric motor 24 independently in accordance with the following truth table:

| Half-bridge | | | | Electric motor | | | Effect |
|---|---|---|---|---|---|---|---|
| 12 | 14 | 18 | 22 | 16 | 24 | 20 | |
| 0 | 0 | 0 | 0 | Off | Off | Off | Stop |
| 0 | 0 | 0 | 1 | Off | On | Off | 24 + |
| 0 | 0 | 1 | 0 | Off | On | On | |
| 0 | 0 | 1 | 1 | Off | Off | On | 20 + |
| 0 | 1 | 0 | 0 | On | Off | Off | 16 + |
| 0 | 1 | 0 | 1 | On | On | Off | |
| 0 | 1 | 1 | 0 | On | On | On | |
| 0 | 1 | 1 | 1 | On | Off | On | |
| 1 | 0 | 0 | 0 | On | Off | On | |
| 1 | 0 | 0 | 1 | On | On | On | |
| 1 | 0 | 1 | 0 | On | On | Off | |
| 1 | 0 | 1 | 1 | On | Off | Off | 16 - |
| 1 | 1 | 0 | 0 | Off | Off | On | 20 - |
| 1 | 1 | 0 | 1 | Off | On | On | |
| 1 | 1 | 1 | 0 | Off | On | Off | 24 - |
| 1 | 1 | 1 | 1 | Off | Off | Off | Stop |

The respective half-bridges 6 are listed with their reference signs in the left-hand column. A '1' stands for a half-bridge 6 that is energized, a '0' for a half-bridge 6 that is not energized. Each line represents a switching configuration. The electric motors 2 are also listed with their reference symbol and are located in the middle column. In this context, 'Off' means that the respective electric motor 2 is not energized by any half-bridge 6. Correspondingly, 'On' means that the respective electric motor 2 is supplied with energy by one half-bridge 6 or by both half-bridges 6. Finally, the right-hand column lists the effect of the respective switching configuration on the electric motor 2 named with the corresponding reference symbol. The polarity of the respective electric motor 2 caused by the switching configuration is marked with a '+' or a '-', whereby either a clockwise rotation or a counterclockwise rotation of the respective electric motor 2 is caused.

Gate terminals of the high-side transistors 8 and the low-side transistors 10 are connected to a control unit 30 for signal transmission. The control unit 30 is employed to trigger the gate terminals with the above switching configurations and cause the respective electric motor 2 to be controlled accordingly. A monitoring unit 28 in the form of a smart high-side power switch is formed between the control unit 30 and each gate terminal of each high-side transistor 8. The smart high-side power switch is configured for disconnecting the signal connection between the control unit 30 and the gate terminal of the respective high-side transistor 10 when a predetermined temperature limit value of the respective half-bridge 6 is exceeded or when a predetermined current limit value is exceeded, or a short circuit occurs. For this purpose, the smart high-side power switch is galvanically conductively connected to the respective half-bridge 6. The first electric motor 16, the second electric motor 20 and the third electric motor 24 are controlled via the low-side transistors 10 using pulse width modulation with the control unit 30. The high-side transistors 10 of the half-bridges 6 are permanently triggered with the control unit 30 in order to enable constant monitoring of the current and the temperature in the respective half-bridge 6.

Fig. 2 shows a motor drive unit 1 with an additional fifth half-bridge 32. A fourth electric motor 34 is contacted with the midpoint 11 of the fifth half-bridge 32 on the one hand and with the midpoint 11 of the first half-bridge 12 on the other hand, such that a fifth H-Bridge is formed. This contacting with the respective half-bridges 6 makes it possible to control the first electric motor 16, the second electric motor 20, the third electric motor 24 and the fourth electric motor 34 independently of one another in order to control two electrically activated door locks, an electrically activated door closer and a hold/clutch process independently of one another in accordance with the following truth table:

| Half-bridge | | | | | | Electric motor | | | Effect |
|---|---|---|---|---|---|---|---|---|---|
| 12 | 14 | 18 | 22 | 32 | 16 | 24 | 20 | 34 | |
| 0 | 0 | 0 | 0 | 0 | Off | Off | Off | Off | Stop |
| 0 | 0 | 0 | 0 | 1 | Off | Off | Off | On | 34 + |
| 0 | 0 | 0 | 1 | 0 | Off | On | Off | Off | 24 + |
| 0 | 0 | 0 | 1 | 1 | Off | On | Off | On | |
| 0 | 0 | 1 | 0 | 0 | Off | On | On | Off | |
| 0 | 0 | 1 | 0 | 1 | Off | On | On | On | |
| 0 | 0 | 1 | 1 | 0 | Off | Off | On | Off | 20 + |
| 0 | 0 | 1 | 1 | 1 | Off | Off | On | On | |
| 0 | 1 | 0 | 0 | 0 | On | Off | Off | Off | 16 + |
| 0 | 1 | 0 | 0 | 1 | On | Off | Off | On | |
| 0 | 1 | 0 | 1 | 0 | On | On | Off | Off | |
| 0 | 1 | 0 | 1 | 1 | On | On | Off | On | |
| 0 | 1 | 1 | 0 | 0 | On | On | On | Off | |
| 0 | 1 | 1 | 0 | 1 | On | On | On | On | |
| 0 | 1 | 1 | 1 | 0 | On | Off | On | Off | |
| 0 | 1 | 1 | 1 | 1 | On | Off | On | On | |
| 1 | 0 | 0 | 0 | 0 | On | Off | On | On | |
| 1 | 0 | 0 | 0 | 1 | On | Off | On | Off | |
| 1 | 0 | 0 | 1 | 0 | On | On | On | On | |
| 1 | 0 | 0 | 1 | 1 | On | On | On | Off | |
| 1 | 0 | 1 | 0 | 0 | On | On | Off | On | |
| 1 | 0 | 1 | 0 | 1 | On | On | Off | Off | |
| 1 | 0 | 1 | 1 | 0 | On | Off | Off | On | |
| 1 | 0 | 1 | 1 | 1 | On | Off | Off | Off | 16 - |
| 1 | 1 | 0 | 0 | 0 | Off | Off | On | On | |
| 1 | 1 | 0 | 0 | 1 | Off | Off | On | Off | 20 - |
| 1 | 1 | 0 | 1 | 0 | Off | On | On | On | |
| 1 | 1 | 0 | 1 | 1 | Off | On | On | Off | |
| 1 | 1 | 1 | 0 | 0 | Off | On | Off | On | |
| 1 | 1 | 1 | 0 | 1 | Off | On | Off | Off | 24 - |
| 1 | 1 | 1 | 1 | 0 | Off | Off | Off | On | 34 - |
| 1 | 1 | 1 | 1 | 1 | Off | Off | Off | Off | Stop |

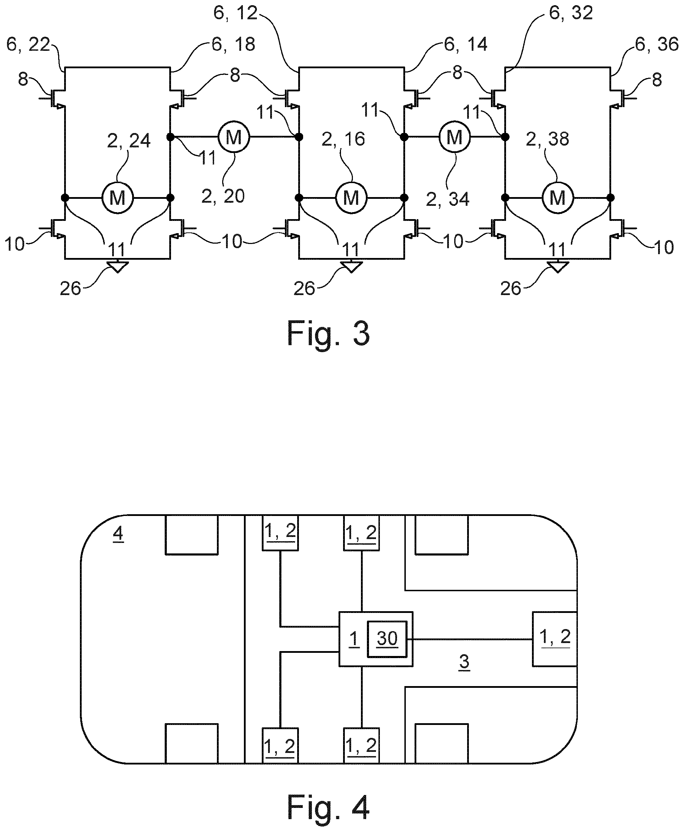

Fig. 3 depicts a motor drive unit 1 according to a further preferred embodiment with a fifth half-bridge 32 and a sixth half-bridge 36. A fourth electric motor 34 is in contact with the midpoint 11 of the second half-bridge 14 on one side and with the midpoint 11 of the fifth half-bridge 32 on the other side, such that a fifth H-Bridge is formed. A fifth electric motor 38 is in contact with the midpoint 11 of the fifth half-bridge 32 on the one hand and with the midpoint 11 of the sixth half-bridge 36 on the other hand, such that a sixth H-Bridge is formed. This contacting with the respective half-bridges 6 makes it possible to control the first electric motor 16, the second electric motor 20, the third electric motor 24, the fourth electric motor 34 and the fifth electric motor 38 independently of one another in accordance with the following truth table:

| Half-bridge | | | | | | | Electric motor | | | | Effect |
|---|---|---|---|---|---|---|---|---|---|---|---|
| 22 | 18 | 12 | 14 | 32 | 36 | 24 | 20 | 16 | 34 | 38 | |
| 0 | 0 | 0 | 0 | 0 | 0 | Off | Off | Off | Off | Off | Stop |
| 0 | 0 | 0 | 0 | 0 | 1 | Off | Off | Off | Off | On | 38 + |
| 0 | 0 | 0 | 0 | 1 | 0 | Off | Off | Off | On | On | |
| 0 | 0 | 0 | 0 | 1 | 1 | Off | Off | Off | On | Off | 34 + |
| 0 | 0 | 0 | 1 | 0 | 0 | Off | Off | On | On | Off | |
| 0 | 0 | 0 | 1 | 0 | 1 | Off | Off | On | On | On | |
| 0 | 0 | 0 | 1 | 1 | 0 | Off | Off | On | Off | On | |
| 0 | 0 | 0 | 1 | 1 | 1 | Off | Off | On | Off | Off | 16 + |
| 0 | 0 | 1 | 0 | 0 | 0 | Off | On | On | Off | Off | |
| 0 | 0 | 1 | 0 | 0 | 1 | Off | On | On | Off | On | |
| 0 | 0 | 1 | 0 | 1 | 0 | Off | On | On | On | On | |
| 0 | 0 | 1 | 0 | 1 | 1 | Off | On | On | On | Off | |
| 0 | 0 | 1 | 1 | 0 | 0 | Off | On | Off | On | Off | |
| 0 | 0 | 1 | 1 | 0 | 1 | Off | On | Off | On | On | |
| 0 | 0 | 1 | 1 | 1 | 0 | Off | On | Off | Off | ON | |
| 0 | 0 | 1 | 1 | 1 | 1 | Off | On | Off | Off | Off | 20 + |
| 0 | 1 | 0 | 0 | 0 | 0 | On | On | Off | Off | Off | |
| 0 | 1 | 0 | 0 | 0 | 1 | On | On | Off | Off | On | |
| 0 | 1 | 0 | 0 | 1 | 0 | On | On | Off | On | On | |
| 0 | 1 | 0 | 0 | 1 | 1 | On | On | Off | On | Off | |
| 0 | 1 | 0 | 1 | 0 | 0 | On | On | On | On | Off | |
| 0 | 1 | 0 | 1 | 0 | 1 | On | On | On | On | On | All on |
| 0 | 1 | 0 | 1 | 1 | 0 | On | On | On | Off | On | |
| 0 | 1 | 0 | 1 | 1 | 1 | On | On | On | Off | Off | |
| 0 | 1 | 1 | 0 | 0 | 0 | On | Off | On | Off | Off | |
| 0 | 1 | 1 | 0 | 0 | 1 | On | Off | On | Off | On | |
| 0 | 1 | 1 | 0 | 1 | 0 | On | Off | On | On | On | |
| 0 | 1 | 1 | 0 | 1 | 1 | On | Off | On | On | Off | |
| 0 | 1 | 1 | 1 | 0 | 0 | On | Off | Off | On | Off | |
| 0 | 1 | 1 | 1 | 0 | 1 | On | Off | Off | On | On | |
| 0 | 1 | 1 | 1 | 1 | 0 | On | Off | Off | Off | On | |
| 0 | 1 | 1 | 1 | 1 | 1 | On | Off | Off | Off | Off | 24 + |
| 1 | 0 | 0 | 0 | 0 | 0 | On | Off | Off | Off | Off | 24 - |
| 1 | 0 | 0 | 0 | 0 | 1 | On | Off | Off | Off | On | |
| 1 | 0 | 0 | 0 | 1 | 0 | On | Off | Off | On | On | |
| 1 | 0 | 0 | 0 | 1 | 1 | On | Off | Off | On | Off | |
| 1 | 0 | 0 | 1 | 0 | 0 | On | Off | On | On | Off | |
| 1 | 0 | 0 | 1 | 0 | 1 | On | Off | On | On | On | |
| 1 | 0 | 0 | 1 | 1 | 0 | On | Off | On | Off | On | |
| 1 | 0 | 0 | 1 | 1 | 1 | On | Off | On | Off | Off | |
| 1 | 0 | 1 | 0 | 0 | 0 | On | On | On | Off | Off | |
| 1 | 0 | 1 | 0 | 0 | 1 | On | On | On | Off | On | |
| 1 | 0 | 1 | 0 | 1 | 0 | On | On | On | On | On | All on |
| 1 | 0 | 1 | 0 | 1 | 1 | On | On | On | On | Off | |
| 1 | 0 | 1 | 1 | 0 | 0 | On | On | Off | On | Off | |
| 1 | 0 | 1 | 1 | 0 | 1 | On | On | Off | On | On | |
| 1 | 0 | 1 | 1 | 1 | 0 | On | On | Off | Off | On | |
| 1 | 0 | 1 | 1 | 1 | 1 | On | On | Off | Off | Off | |
| 1 | 1 | 0 | 0 | 0 | 0 | Off | On | Off | Off | Off | 20 - |
| 1 | 1 | 0 | 0 | 0 | 1 | Off | On | Off | Off | On | |
| 1 | 1 | 0 | 0 | 1 | 0 | Off | On | Off | On | On | |
| 1 | 1 | 0 | 0 | 1 | 1 | Off | On | Off | On | Off | |
| 1 | 1 | 0 | 1 | 0 | 0 | Off | On | On | On | Off | |
| 1 | 1 | 0 | 1 | 0 | 1 | Off | On | On | On | On | |
| 1 | 1 | 0 | 1 | 1 | 0 | Off | On | On | Off | On | |
| 1 | 1 | 0 | 1 | 1 | 1 | Off | On | On | Off | Off | |
| 1 | 1 | 1 | 0 | 0 | 0 | Off | Off | On | Off | Off | 16 - |
| 1 | 1 | 1 | 0 | 0 | 1 | Off | Off | On | Off | On | |
| 1 | 1 | 1 | 0 | 1 | 0 | Off | Off | On | On | On | |
| 1 | 1 | 1 | 0 | 1 | 1 | Off | Off | On | On | Off | |
| 1 | 1 | 1 | 1 | 0 | 0 | Off | Off | Off | On | Off | 34 - |
| 1 | 1 | 1 | 1 | 0 | 1 | Off | Off | Off | On | On | |
| 1 | 1 | 1 | 1 | 1 | 0 | Off | Off | Off | Off | On | 38 - |
| 1 | 1 | 1 | 1 | 1 | 1 | Off | Off | Off | Off | Off | Stop |

Finally, Fig. 4 shows a system comprising the electronic door latch arrangement 3 with the motor drive unit 1 in the vehicle 4. The motor drive unit 1 is arranged centrally in the vehicle 4 and comprises the control unit 30 and the electric motors 2 in doors and a tailgate of the vehicle 4. In this case, the electronic door latch arrangements 3 is an electronically actuated door closer. With the motor drive unit 1, it is therefore possible to close the doors of the vehicle 4 and a tailgate independently of each other via the control of the respective electric motors 2.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### List of reference symbols

- 1: motor drive unit
- 2: electric motor
- 3: electronic door latch arrangement
- 4: vehicle
- 6: half-bridge
- 8: high-side Transistor
- 10: low-side Transistor
- 11: midpoint
- 12: first half-bridge
- 14: second half-bridge
- 16: first electric motor
- 18: third half-bridge
- 20: second electric motor
- 22: fourth half-bridge
- 24: third electric motor
- 26: ground potential
- 28: monitoring unit
- 30: control unit
- 32: fifth half-bridge
- 34: fourth electric motor
- 36: sixth half-bridge
- 38: fifth electric motor

## Claims

1. Motor drive unit (1) configured for driving N-1 electric motors (2) of an electronic door latch arrangement (3) of a vehicle (4), comprising N ≥ 4 half-bridges (6) and the N-1 electric motors (2) with N being a natural number, wherein
each half-bridge (6) comprises two switches (8, 10) arranged in series thereby forming a midpoint (11),
each motor (2) is galvanically conductively connected to two different midpoints (11), and
each midpoint (11) is galvanically conductively connected to ≥ 1 and ≤ N-2 electric motors (2).

2. Motor drive unit (1) according to the previous claim, wherein the N ≥ 4 half-bridges (6) comprise a first half-bridge (12), a second half-bridge (14), a third half-bridge (18) and a fourth half-bridge (22) and the N-1 electric motors (2) comprise a first electric motor (16), a second electric motor (20) and a third electric motor (24),
the first electric motor (16) is galvanically conductively connected to the midpoints (11) of the first half-bridge (12) and the second half-bridge (14),
the second electric motor (20) is galvanically conductively connected to the midpoints (11) of the first half-bridge (12) and the third half-bridge (18), and
the third electric motor (24) is galvanically conductively connected to the midpoints (11) of the third half-bridge (18) and the fourth half-bridge (22).

3. Motor drive unit (1) according to the previous claim, wherein the N ≥ 4 half-bridges (6) comprise a fifth half-bridge (32) and a sixth half-bridge (36) and the N-1 electric motors (2) comprise a fourth electric motor (34) and a fifth electric motor (38),
the fourth electric motor (34) is galvanically conductively connected to the midpoints (11) of the second half-bridge (14) and the fifth half-bridge (32), and
the fifth electric motor (38) is galvanically conductively connected to the midpoints (11) of the fifth half-bridge (32) and the sixth half-bridge (36).

4. Motor drive unit (1) according to claim 2, wherein the N ≥ 4 half-bridges (6) comprise a fifth half-bridge (32) and the N-1 electric motors (2) comprise a fourth electric motor (34), wherein
the fourth electric motor (34) is galvanically conductively connected to the midpoints (11) of the first half-bridge (12) and the fifth half-bridge (32).

5. Motor drive unit (1) according to any one of the previous claims, wherein the two switches (8, 10) are provided as a high-side transistor (8) and a low-side transistors (10) each comprising a respective source terminal, a respective drain terminal and a respective gate terminal,
all source terminals of all high-side transistors (8) are galvanically conductively configured for being connected to an energy source, and
the drain terminals of all low-side transistors (10) are galvanically conductively configured for being connected to a ground potential (26).

6. Motor drive unit (1) according to the previous claim, wherein every second half-bridge (6) comprises a monitoring unit (28), and
the respective monitoring unit (28) is configured for performing a diagnosis in an event of a short circuit to the ground potential (26) and/or to the energy source and/or to an open load.

7. Motor drive unit (1) according to the previous claim, wherein the respective monitoring unit (28) has a current sensor.

8. Motor drive unit (1) according to any one of the previous two claims, wherein the respective monitoring unit (28) is provided as a smart high-side power switch formed on each high-side transistor (8) of each half-bridge (6), wherein
the respective smart high-side power switch is connected to a gate terminal of the respective high-side transistor (8) for signal transmission and galvanically conductively connected to the respective half-bridge (6), and
the respective smart high-side power switch is configured for disconnecting the gate terminal of the high-side transistor (8) when a predetermined temperature limit value is exceeded and/or a predetermined current limit value is exceeded.

9. Motor drive unit (1) according to any one of the previous claims, comprising a control unit (30), wherein the control unit (30) is connected to the gate terminals of the high-side transistors (8) and the gate terminals of the low-side transistors (10) of the half-bridges (6) for transmitting signals, and the control unit (30) is configured for controlling the half-bridges (6), such that each electric motor (2) is controlled individually.

10. Motor drive unit (1) according to the previous claim, wherein the control unit (30) is further configured for controlling a rotational frequency of each controlled electric motor (2).

11. Motor drive unit (1) according to any one of the claims 9 or 10, wherein the control unit (30) is configured for controlling the respective electric motor (2) directly or by pulse width modulation.

12. Motor drive unit (1) according to the previous claim, wherein the control unit (30) is configured for pulse width modulating exclusively the low-side transistors (10) and for permanently triggering the gate terminals of the high-side transistors (8), such that the high-side transistors (8) are switched through permanently.

13. Method for operating the motor drive unit (1) according to any one of the claims 5 to 12 for driving the N-1 electric motors (2) of the electronic door latch arrangement (3) of the vehicle (4), with the N ≥ 4 half-bridges (6) and the N-1 electric motors (2), comprising the following method steps:
triggering the gate terminals of the high-side transistors (8) of the half-bridges (6), such that the high-side transistors (8) are switched through,
monitoring current and temperature of the half-bridges (6) and interrupting the triggering of the gate terminal immediately when a predetermined temperature has been exceeded or a predetermined current value has been exceeded, and during the monitoring step:
controlling the electric motors (2) via the low-side transistors (10) of the half-bridges (6) directly or with pulse width modulation.

14. Electronic door latch arrangement (3) for a vehicle (4) comprising the motor drive unit (1) according to any one of the claims 1 to 12.

15. Vehicle (4) with the electronic door latch arrangement (3) according to claim 14.
